# EUROPEAN PATENT SPECIFICATION

(11) **EP 3 888 877 B1**
(45) Date of publication and mention of the grant of the patent: **21.12.2022**
(21) Application number: 21163848.1
(22) Date of filing: 22.03.2021
(51) Int. Cl.: B29C 45/76, B29C 45/17

(54) **SETUP SUPPORTING DEVICE AND SETUP SUPPORTING METHOD FOR INJECTION MOLDING MACHINE**
EINRICHTUNGSUNTERSTÜTZUNGSVORRICHTUNG UND EINRICHTUNGSUNTERSTÜTZUNGSVERFAHREN FÜR EINE SPRITZGIESSMASCHINE
DISPOSITIF DE SUPPORT DE CONFIGURATION ET PROCÉDÉ DE SUPPORT DE CONFIGURATION POUR MACHINE DE MOULAGE PAR INJECTION

(30) Priority: 31.03.2020 JP 2020065114
(43) Date of publication of application: 06.10.2021
(73) Proprietor: Sumitomo Heavy Industries, Ltd., Tokyo 141-6025 (JP)
(72) Inventor: HANO, Katsunobu, Chiba-shi, Chiba, 263-0001 (JP)
(74) Representative: Louis Pöhlau Lohrentz

(56) References cited:
- JP-A- 2017 170 776
- US-A1- 2003 154 004
- US-A1- 2013 253 696

## Description

### BACKGROUND OF THE INVENTION

### Field of the Invention

The present invention relates to a setup supporting device and a setup supporting method for an injection molding machine.

### Description of Related Art

When molding is performed by an injection molding machine, a setup work including a plurality of setup items such as resin preparation, mold attachment, and connection of peripheral equipment is carried out in advance.

Japanese Unexamined Patent Publication No. 2004-155088 discloses a setup supporting method for an injection molding machine as follows. In the setup supporting method for the injection molding machine for supporting a predetermined setup relating to the injection molding machine, during the setup, a setup screen is displayed on a display of a controller. While multiple item selection buttons provided corresponding to types of the setup are selected on the setup screen, a guidance message of individual work relating to a selected and predetermined setup is sequentially displayed by a guidance display unit in accordance with a work procedure. United States Patent Publication No. 2003-154004 discloses an injection mold apparatus which has multiple injection zones, each zone having at least one heater and at least one temperature sensor generating a temperature indicating signal. United States Patent Publication No. 2013-253696 discloses a system including operation for thermal management of a molding system. Japanese Unexamined Patent Publication No. 2017-170776 discloses a system that supports the operation of a resin molding factory that uses a plurality of injection molding machines to produce resin molded products.

### SUMMARY OF THE INVENTION

In the related art, how to carry out a setup work often depends on experience of a worker. Therefore, after a temperature of a cylinder is completely raised or after a resin is completely dried, there is a possibility that a stopped state may be continuously maintained at a raised temperature for a long time without completing other setup items. Consequently, there is a possibility that problems may arise such as wastefully consumed electric power, resin burning, and excessive drying.

Therefore, embodiments of the present invention aim to provide a setup supporting device and a setup supporting method for an injection molding machine that supports a setup work.

According to an aspect of the embodiments, there is provided a setup supporting device for an injection molding machine that supports a setup work including a plurality of setup items. The setup supporting device includes a storage unit that stores a table for calculating a work time of the setup items, and a setup work timing determination unit that calculates the work time of the setup items and determines a work start timing of the setup items, based on input information and the table.

According to the aspect of the present invention, it is possible to provide the setup supporting device and the setup supporting method for the injection molding machine that supports the setup work.

### BRIEF DESCRIPTION OF THE DRAWINGS

FIG. 1 is a configuration diagram of an injection molding machine system according to an embodiment.
FIG. 2 is a functional block diagram of a setup supporting device for an injection molding machine.
FIG. 3 illustrates an example of equipment capacity correction data.
FIG. 4 illustrates an example of mold correction data.
FIG. 5 illustrates an example of external environment correction data.
FIG. 6 illustrates an example of worker ability correction data.
FIG. 7 illustrates an example of learning correction data.
FIG. 8 is a flowchart illustrating an example of an operation of the setup supporting device.
FIG. 9 illustrates an example of a display screen displayed on a display unit.
FIG. 10 illustrates an example of a display screen displayed on the display unit after setup work.
FIG. 11 illustrates an example of a work timetable for setup work in a reference example.

### DETAILED DESCRIPTION OF THE INVENTION

Hereinafter, embodiments according to the present invention will be described with reference to the drawings. In each drawing, the same or corresponding reference numerals will be assigned to the same or corresponding configurations, and description thereof will be omitted.

### (Injection Molding Machine System)

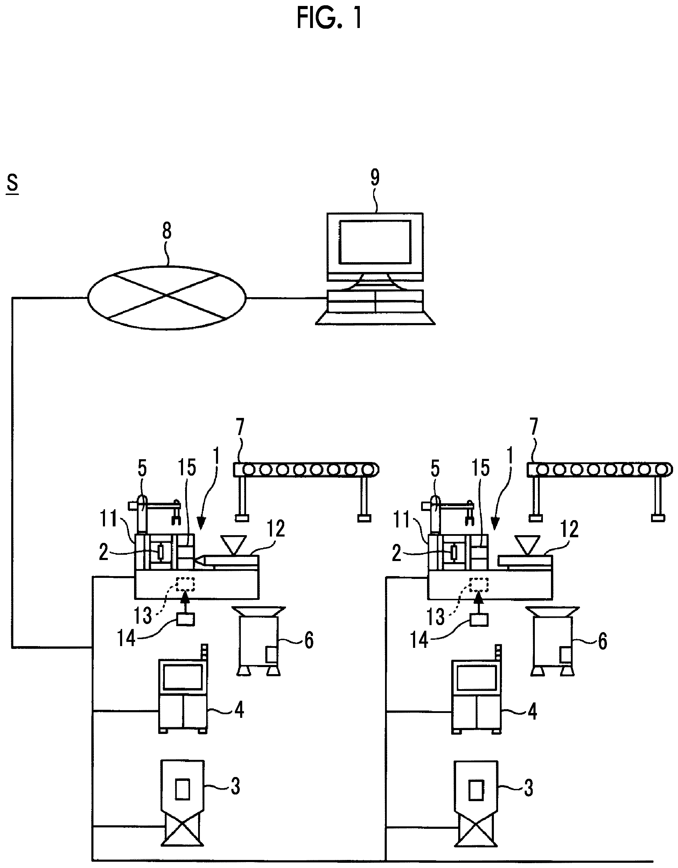

FIG. 1 is a configuration diagram of an injection molding machine system S according to an embodiment.

The injection molding machine system S includes an injection molding machine 1, peripheral equipment of the injection molding machine 1, a network 8, and a molding machine management server 9.

The injection molding machine 1 includes a mold clamping unit 11 that opens and closes a mold unit 2, an ejector unit (not illustrated) that ejects a molding product molded by the mold unit 2, an injection unit 12 that injects a molding material (resin) into the mold unit 2, and a control device 13 that controls each component of the injection molding machine 1. The injection unit 12 includes a cylinder, and a heater for plasticizing the molding material is provided in the cylinder. In addition, the injection molding machine 1 includes an operation unit 14 that receives an input operation of a user and a display unit 15 that displays various information. The information input through the operation unit 14 is input to the control device 13. The control device 13 generates a display screen for displaying various information, and displays the display screen on the display unit 15.

For example, as peripheral equipment of the injection molding machine 1, the injection molding machine system S illustrated in FIG. 1 includes a resin dryer 3, a mold temperature controller 4, a take-out machine 5, a crusher 6, and a conveyor 7.

The resin dryer 3 dries the molding material to be supplied to the injection unit 12. The dried molding material is supplied to the injection unit 12 of the injection molding machine 1.

The mold temperature controller 4 adjusts a temperature of the mold unit 2 to a predetermined temperature. For example, when a flow path is formed in the mold unit 2, the mold temperature controller 4 controls a temperature and/or a flow rate of a heat medium to be supplied to the flow path of the mold unit 2, thereby adjusting the temperature of the mold unit 2 to the predetermined temperature. In addition, when a heater is provided in the mold unit 2, the mold temperature controller 4 controls electric power to be supplied to the heater of the mold unit 2, thereby adjusting the temperature of the mold unit 2 to the predetermined temperature.

The take-out machine 5 takes out the molding product molded by the mold unit 2, and conveys the molding product to the conveyor 7. The take-out machine 5 includes a chuck plate (not illustrated) having a chuck for suctioning the molding product. The molding product is accommodated in a product box (not illustrated) of the conveyor 7.

The crusher 6 crushes a runner generated when the molding product is molded by the mold unit 2.

The product box (not illustrated) for accommodating the molding product is placed on the conveyor 7. The conveyor 7 conveys the product box.

The peripheral equipment of the injection molding machine 1 is connected to the control device 13 of the injection molding machine 1 to be communicable via the network 8.

The control device 13 of the injection molding machine 1 is connected to the molding machine management server 9 to be communicable via the network 8. The control device 13 of the injection molding machine 1 transmits various information on the injection molding machine 1 to the molding machine management server 9. In addition, the peripheral equipment of the injection molding machine 1 is connected to the molding machine management server 9 to be communicable via the network 8. The peripheral equipment of the injection molding machine 1 transmits various information on the peripheral equipment to the molding machine management server 9. The peripheral equipment of the injection molding machine 1 may be configured to transmit various information on the peripheral equipment to the control device 13 of the injection molding machine 1, and to transmit various information on the peripheral equipment to the molding machine management server 9 from the control device 13 of the injection molding machine 1.

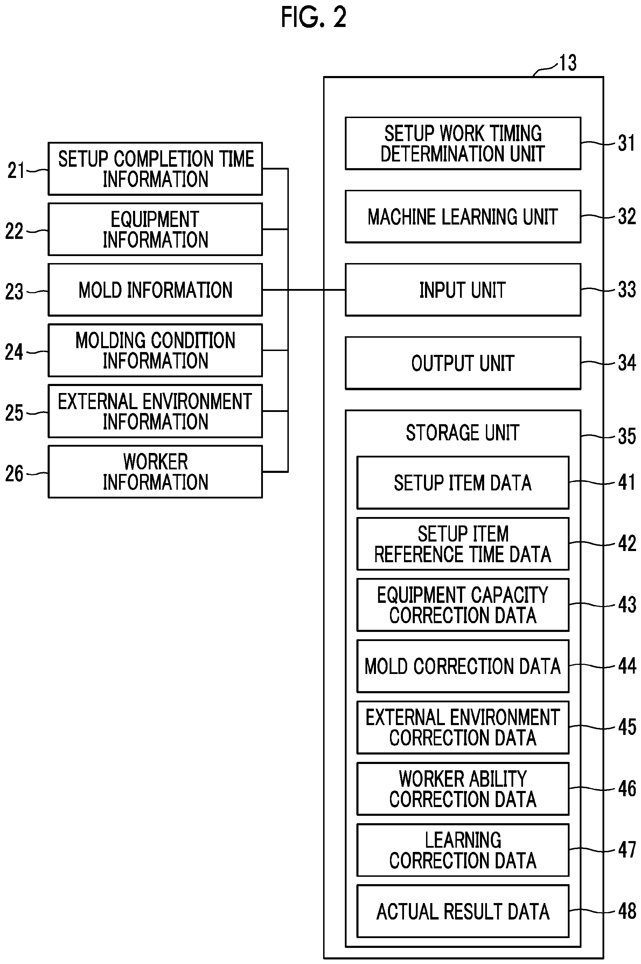

FIG. 2 is a functional block diagram of a setup supporting device of the injection molding machine 1. Here, the setup supporting device of the injection molding machine 1 is installed as one function of the control device 13.

The control device 13 as the setup supporting device includes a setup work timing determination unit 31, a machine learning unit 32, an input unit 33, an output unit 34, and a storage unit 35.

The setup work timing determination unit 31 determines a work start time (work start timing) of each setup item, based on input information (information 21 to 26 to be described later) and data (data 41 to 48 described later) stored in advance in the storage unit 35. That is, the setup work timing determination unit 31 prepares a schedule of a setup work by determining the work start time of each setup item.

The machine learning unit 32 generates learning correction data 47, based on an actual value (actual result data 48 to be described later) of the setup work in the past, and stores the learning correction data 47 in the storage unit 35.

Input information is input to the input unit 33. Here, the information input to the input unit 33 may be information input by the operation unit 14, or may be information transmitted from the peripheral equipment of the injection molding machine 1 or the molding machine management server 9 via the network 8. In addition, the information may be acquired by a sensor provided in the injection molding machine 1.

For example, setup completion time information 21, equipment information 22, mold information 23, molding condition information 24, external environment information 25, and worker information 26 are input to the input unit 33.

The setup completion time information 21 includes a time at which the setup work is completed, in other words, a time at which mass production of the molding product starts. The equipment information 22 includes information on the peripheral equipment of the injection molding machine 1. The mold information 23 includes information on the mold unit 2 attached to the injection molding machine 1. The molding condition information 24 includes information such as a type of the molding material (resin) and temperature raising of the cylinder. The external environment information 25 includes information on an external environment (for example, external air temperature or external air humidity) of the injection molding machine 1. The worker information 26 includes information on a worker who carries out the setup work.

The output unit 34 outputs various information. Here, the work start time of each generated setup item may be displayed on the display unit 15. In addition, the output unit 34 may transmit a control signal to directly control each unit of the injection molding machine 1 or the peripheral equipment.

Various data (data 41 to 46) are stored in advance in the storage unit 35. In addition, the learning correction data 47 generated by the machine learning unit 32 is stored. In addition, the actual value of the past setup work of the injection molding machine 1 is stored in the storage unit 35 as the actual result data 48.

Here, the setup work includes a plurality of items (setup items) . As the setup item data 41, setup items of the setup work are stored. Here, description will be made on an assumption that the setup items of the setup work have "resin preparation", "resin drying", "heater temperature raising", "mold attachment", "mold temperature raising", "crusher preparation", "conveyor installation", "product box preparation", "take-out machine chuck plate attachment", "take-out machine teaching", "purge", and "condition adjustment".

Here, the "resin preparation" refers to a work by which the molding material (resin) can be supplied to the resin dryer 3. The "resin drying" refers to a work by which the resin dryer 3 is driven to dry the molding material (resin). The "heater temperature raising" refers to a work by which the heater of the injection unit 12 is operated to raise the temperature of the cylinder. The molding material inside the cylinder is plasticized by raising the temperature of the cylinder. The "mold attachment" refers to a work by which the mold unit 2 is attached to the mold clamping unit 11. The "mold temperature raising" refers to a work by which the mold temperature controller 4 is operated to control the temperature of the mold unit 2 to a predetermined temperature. The "crusher preparation" refers to a work by which the crusher 6 is brought into an operable state. The "conveyor installation" refers to a work by which the conveyor 7 is disposed around the injection molding machine 1 to bring the conveyor 7 into an operable state. The "product box preparation" refers to a work by which a product box is prepared on the conveyor 7. The "take-out machine chuck plate attachment" refers to a work by which a chuck plate corresponding to the mold unit 2 is attached to the take-out machine 5. The "take-out machine teaching" refers to a work for teaching a position of the chuck plate when the molding product is chucked by the take-out machine 5 and a position of the chuck plate when the molding product is accommodated in the product box. The "purge" refers to a work by which the molding material (resin) is supplied to the injection unit 12 and is plasticized inside the cylinder so that the molding material (resin) inside the cylinder is purged (discharged). The "condition adjustment" refers to a work by which the molding material is injected from the injection unit 12 into the mold unit 2, and while trial molding is performed, molding conditions (a mold clamping force of the mold clamping unit 11, a resin amount of the injection unit 12, and an injection pressure) are adjusted.

In addition, as the setup items, a work sequence may be determined. Information indicating the work sequence is stored in the setup item data 41. For example, the "resin preparation" is performed prior to the "resin drying" . The "mold attachment" is performed prior to the "mold temperature raising" . The "mold attachment" is performed prior to the "take-out machine teaching". The "conveyor installation" is performed prior to the "product box preparation". The "take-out machine chuck plate attachment" is performed prior to the "take-out machine teaching". The "heater temperature raising" is performed prior to the "purge" . The "purge" is performed prior to the "condition adjustment".

In addition, the setup items are classified into a setup item in which the worker needs to actually carry out a work (hereinafter, also referred to as a "human work") and a setup item in which an automatic operation can be performed under the control of the control device 13 (hereinafter, also referred to as an "automatic operation") . The setup item data 41 stores information indicating whether each of the setup items is the human work or the automatic operation. For example, the "resin preparation", the "mold attachment", the "crusher preparation", the "conveyor installation", the "product box preparation", the "take-out machine chuck plate attachment", the "take-out machine teaching", and the "condition adjustment" are the setup items belonging to the human work. The "resin drying", the "heater temperature raising", the "mold temperature raising", and the "purge" are the setup items belonging to the automatic operation. Each of the setup items described as the human work may be automatically performed in some cases.

In addition, some of the setup items can be concurrently performed. The setup item data 41 may store information indicating the setup items that can be concurrently performed.

The setup item reference time data 42 stores a reference work time for each of the setup items.

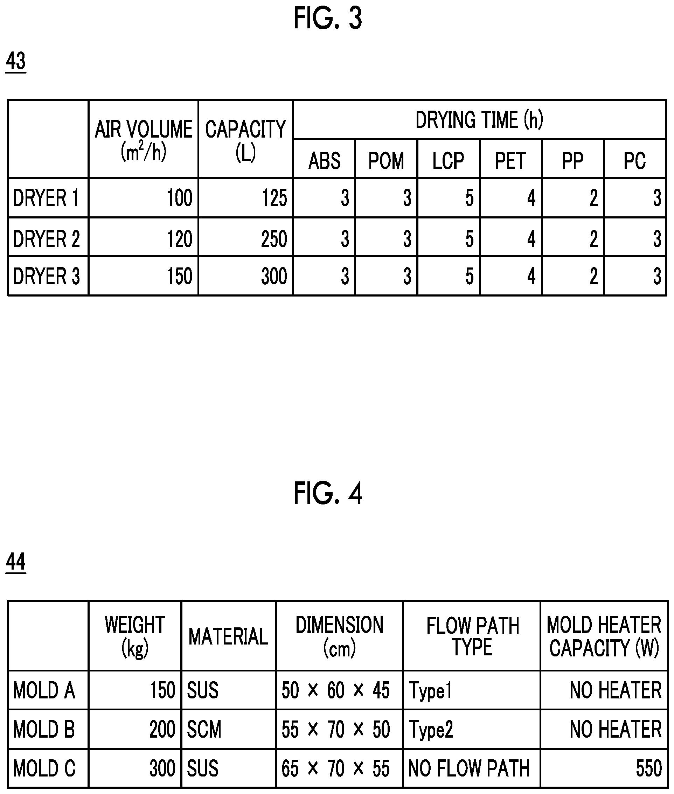

The equipment capacity correction data 43 stores data for calculating the work time in the setup item in which the work time varies in accordance with the peripheral equipment of the injection molding machine 1. FIG. 3 illustrates an example of the equipment capacity correction data 43. Here, as the peripheral equipment of the injection molding machine 1, the equipment capacity correction data 43 of the resin dryer 3 is stored. In the example illustrated in FIG. 3, for each of the resin dryers 3, the equipment capacity correction data 43 stores an air volume of the resin dryer 3, capacity of the resin dryer 3, and a drying time (work time) for each of the molding materials.

The mold correction data 44 stores data of the mold unit 2 attached to the mold clamping unit 11 of the injection molding machine 1. FIG. 4 illustrates an example of the mold correction data 44. In the example illustrated in FIG. 4, for each of the mold units 2, the mold correction data 44 stores a weight of the mold unit 2, a material of the mold unit 2, dimensions of the mold unit 2, the presence or absence of a flow path formed in the mold unit 2, a type of the flow path, the presence or absence of the heater provided in the mold unit 2, and a calorific value of the heater. A temperature raising time (work time) in the "mold temperature raising" can be calculated by performing heat conduction analysis, based on the mold correction data 44 illustrated in FIG. 4.

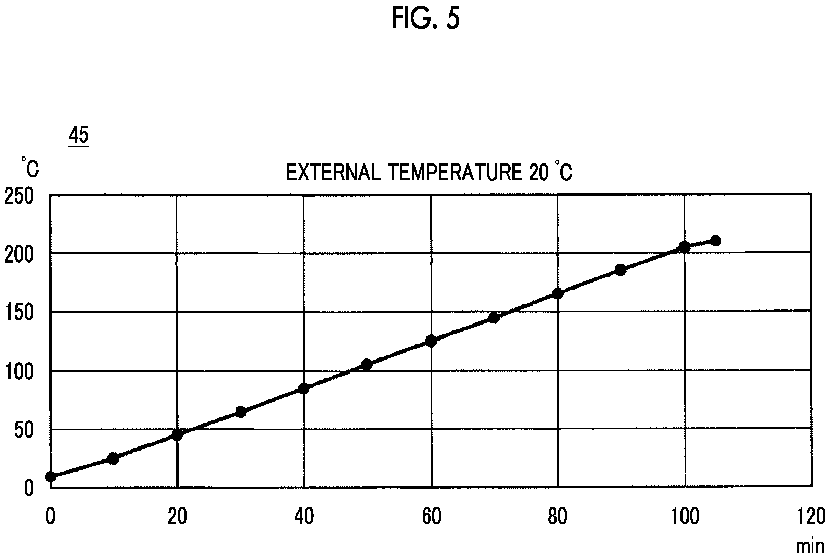

The external environment correction data 45 stores data for calculating the work time in the setup item in which the work time varies in accordance with the external environment information 25. FIG. 5 illustrates an example of the external environment correction data 45. Here, as an example of the setup item in which the work time varies in accordance with the external environment information 25, the external environment correction data 45 in the "heater temperature raising" is illustrated. In the example illustrated in FIG. 5, the external environment correction data 45 stores the temperature raising time and the temperature of the cylinder in association with each other for each external air temperature. Based on the external environment correction data 45 illustrated in FIG. 5, the temperature raising time (work time) in the "heater temperature raising" can be calculated.

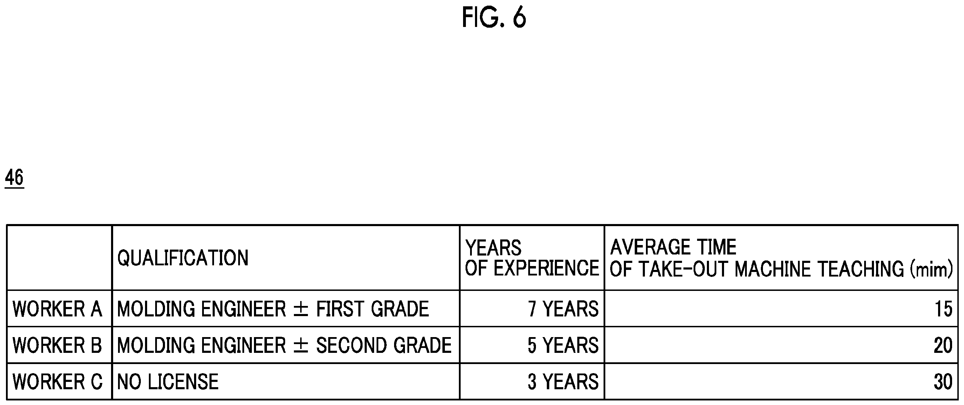

The worker ability correction data 46 stores data for calculating the work time in the setup item in which the work time varies in accordance with the worker. FIG. 6 illustrates an example of the worker ability correction data 46. Here, as an example of the setup item in which the work time varies in accordance with the worker, the worker ability correction data 46 in the "take-out machine teaching" is illustrated. In the example illustrated in FIG. 6, for each worker, the worker ability correction data 46 stores qualifications possessed by the worker and years of experience. In addition, the worker ability correction data 46 stores an average time (work time) required for the teaching of the take-out machine 5 designated based on information on the worker.

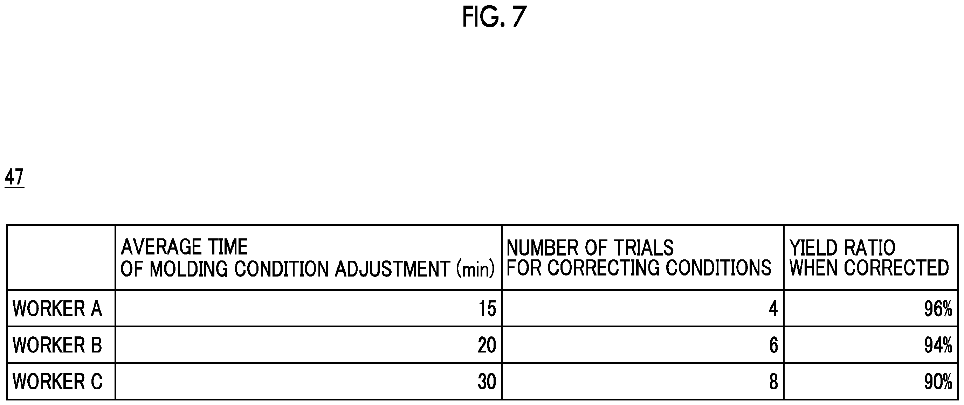

The learning correction data 47 stores data for calculating the work time learned by the machine learning unit 32. FIG. 7 illustrates an example of the learning correction data 47. Here, the learning correction data 47 in the "condition adjustment" is illustrated. In the example illustrated in FIG. 7, for each worker, the learning correction data 47 stores an average time required for adjusting the molding conditions, the number of trials for correcting conditions, and a yield rate when the conditions are corrected. The average time (work time) required for adjusting the molding conditions, the number of trials for correcting the conditions, and the yield rate at when the conditions are corrected are calculated, based on the actual result data 48.

In the actual result data 48, the actual result data of the setup work of the injection molding machine 1 is stored. For example, in the setup work, the worker and a time required for each setup item are stored.

### <Operation of Setup Supporting Device>

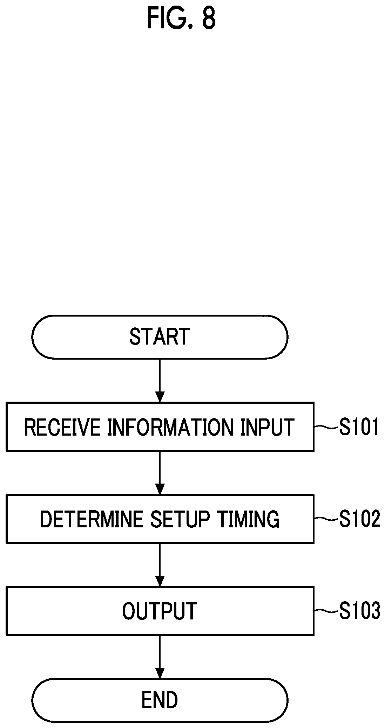

Next, an operation of the setup supporting device will be described with reference to FIG. 8. FIG. 8 is a flowchart illustrating an example of the operation of the setup supporting device.

In Step S101, the setup work timing determination unit 31 receives an input of input information. Here, the worker operates the operation unit 14 to input various information (setup completion time information 21, equipment information 22, mold information 23, external environment information 25, and worker information 26). The information input by the operation unit 14 is input to the setup work timing determination unit 31 via the input unit 33. The input of various information is not limited to the input of the worker, and may be an input from the molding machine management server 9 via the network 8.

In Step S102, the setup work timing determination unit 31 calculates a work start timing of each setup item, based on the input information (setup completion time information 21, equipment information 22, mold information 23, molding condition information 24, external environment information 25, worker information 26) and correction data (setup item data 41, setup item reference time data 42, equipment capacity correction data 43, mold correction data 44, external environment correction data 45, worker ability correction data 46, learning correction data 47, and actual result data 48) stored in the storage unit 35.

Specifically, the setup work timing determination unit 31 first calculates the work time of each setup item, based on the input information. For example, with reference to the equipment capacity correction data 43 (refer to FIG. 3), the setup work timing determination unit 31 calculates the work time of the "resin drying", based on model information on the resin dryer 3 included in the equipment information 22 and a resin name included in the molding condition information 24. With reference to the mold correction data 44 (refer to FIG. 4), the setup work timing determination unit 31 calculates the work time of the "mold temperature raising", based on the mold information 23. With reference to the external environment correction data 45 (refer to FIG. 5), the setup work timing determination unit 31 calculates the work time of the "heater temperature raising", based on the temperature raising of the cylinder which is included in the molding condition information 24 and the external temperature included in the external environment information 25. With reference to the worker ability correction data 46 (refer to FIG. 6), the setup work timing determination unit 31 calculates the work time of the "take-out machine teaching", based on the worker information 26. With reference to the learning correction data 47 (refer to FIG. 7), the setup work timing determination unit 31 calculates the work time of the "condition adjustment", based on the worker information 26. In addition, the work time of the "resin preparation" or the "mold attachment" is acquired from the setup item reference time data 42.

Next, the setup work timing determination unit 31 determines each work start timing of the respective setup items, based on the calculated work time of each setup item, the setup completion time information 21, information indicating a sequence of the setup items of setup item data 41, or information indicating the setup items for which the worker can concurrently carry out the work in the setup item data 41.

In Step S103, the setup work timing determination unit 31 outputs a work start time (work start timing) of each calculated setup item. For example, the setup work timing determination unit 31 causes the display unit 15 to display the work start time of each calculated setup item via the output unit 34. In this manner, the worker can identify the work start time of each setup item. In addition, with regard to the setup item for the human work, the worker can carry out the work for each setup item in accordance with the work start time presented on the display unit 15. In addition, with regard to the setup item for the automatic operation, the control device 13 can carry out the work for each setup item in accordance with the determined work start time.

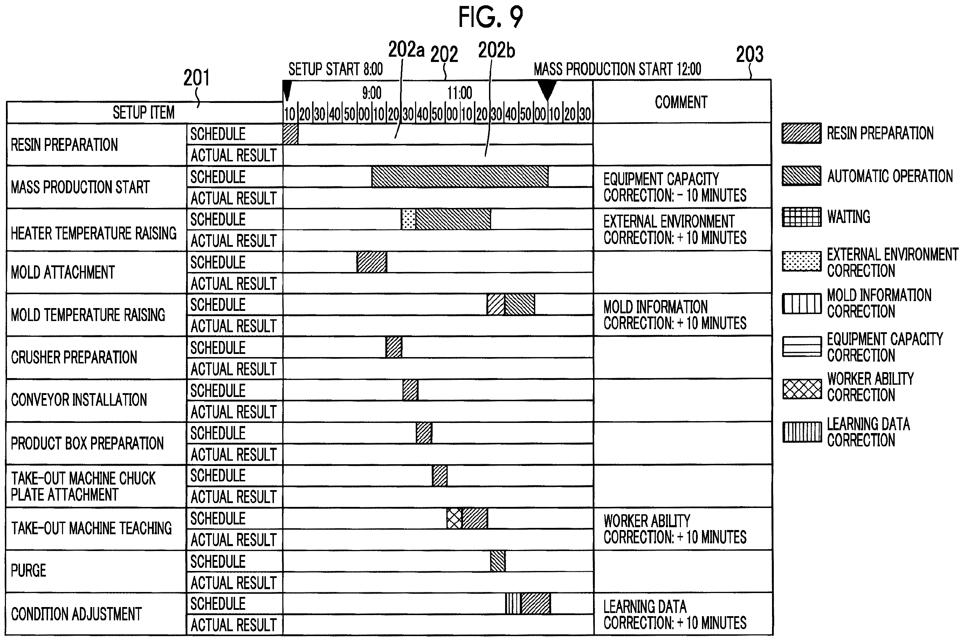

FIG. 9 illustrates an example of a display screen displayed on the display unit 15. An item name of a setup item 201 is displayed on the display screen. Corresponding to the item name, in a next column of a column of the setup item 201 (next column on the right in FIG. 9), a time bar 202 of work times (work start time and work end time) of each setup item is displayed. In addition, the time bar 202 displays a schedule column 202a generated by the setup work timing determination unit 31. An actual result column 202b that displays an actual result time may be provided in the time bar 202. In addition, a comment column 203 corresponding to the item name is provided on the display screen. The comment column 203 displays a reason for correcting the work time and a correction time. In this manner, it is possible to easily identify an increase or a decrease from a reference time for each setup item stored in setup item reference time data 42.

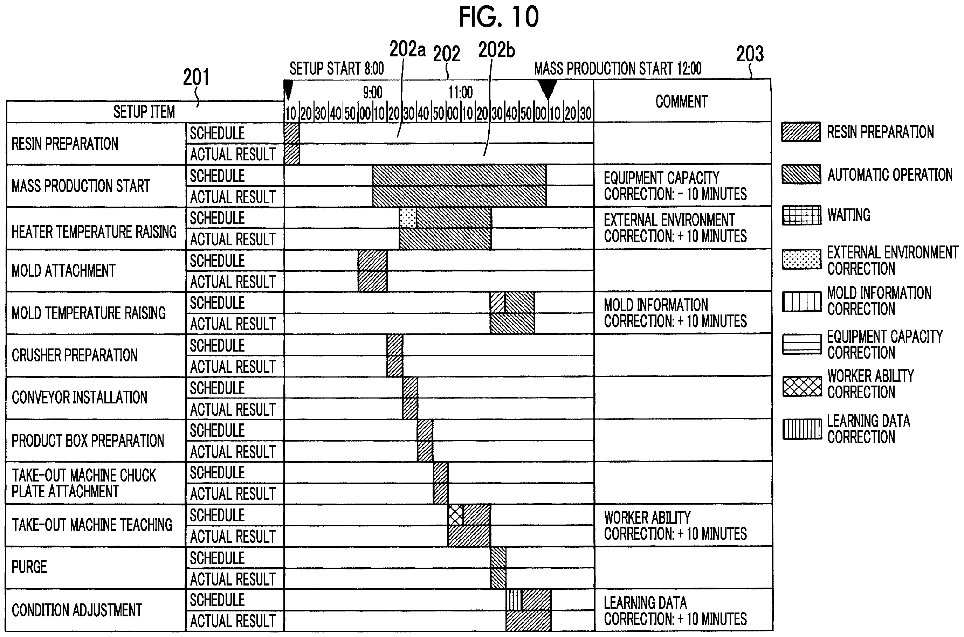

FIG. 10 illustrates an example of the display screen displayed on the display unit 15 after the setup work. As illustrated in FIG. 10, the actual result column 202b may display the work times (work start time and work end time) of each setup item.

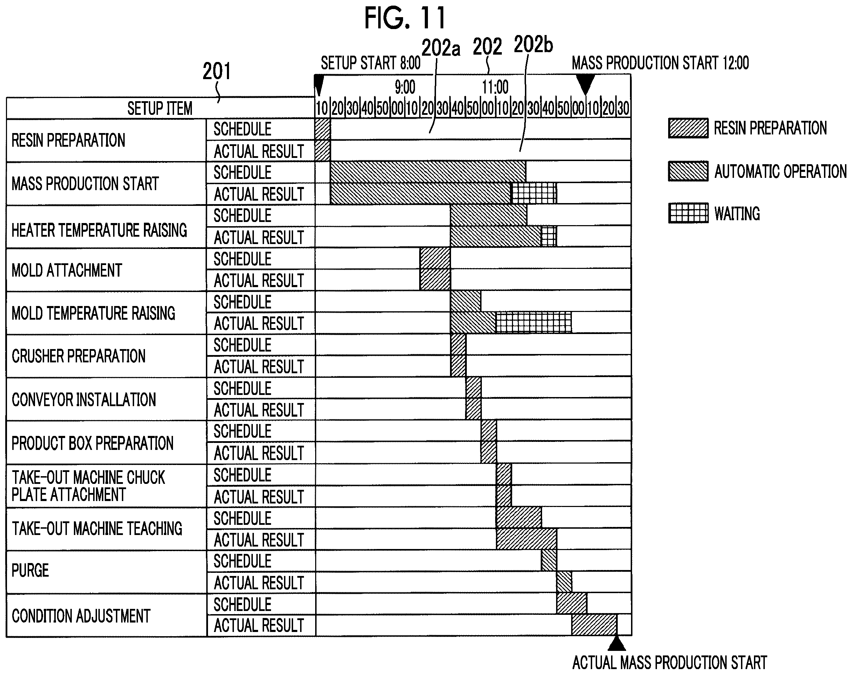

Here, FIG. 11 illustrates an example of a work timetable for the setup work in a reference example. Here, FIG. 11 illustrates that the start time of the "purge" is delayed since the "purge" takes time for the "the take-out machine teaching" due to an inexperienced skill of the worker. As a result, a waiting time is wastefully used after the "resin drying" and the "heater temperature raising". In addition, it will be understood that the end time of the "purge" and the start time of the "condition adjustment" are also delayed due to a delay in the start time of the "purge". In addition, the work time of the "condition adjustment" is further prolonged due to the inexperienced skill of the worker. As a result, the setup work is not completed until 12:00 when mass production starts, and productivity of the injection molding machine 1 is degraded.

In contrast, as illustrated in FIG. 10, the setup supporting device of the present embodiment corrects the work time and the work start time in each setup step in accordance with equipment capacity, an external environment, mold information, capacity of the worker, or learning data. Specifically, in the example illustrated in FIG. 10, with reference to the equipment capacity correction data 43 (refer to FIG. 3), the setup work timing determination unit 31 sets (corrects) the work time of the "resin drying" to be 10 minutes shorter than a normal time (reference time), based on the model information of the resin dryer 3 which is included in the equipment information 22 and a resin name included in the molding condition information 24. In addition, with reference to the external environment correction data 45 (refer to FIG. 5), the setup work timing determination unit 31 sets (corrects) the work time of the "heater temperature raising" to be 10 minutes longer than the normal time (reference time), based on the temperature raising of the cylinder included in the molding condition information 24 and the external temperature included in the external environment information 25. In addition, with reference to the mold correction data 44 (refer to FIG. 4), the setup work timing determination unit 31 sets (corrects) the work time of the "mold temperature raising" to be 10 minutes longer than the normal time (reference time), based on the mold information 23. In addition, with reference to the worker ability correction data 46 (refer to FIG. 6), the setup work timing determination unit 31 sets (corrects) the work time of "take-out machine teaching" to be 10 minutes longer than the normal time (reference time), based on the worker information 26. In addition, with reference to the learning correction data 47 (refer to FIG. 7), the setup work timing determination unit 31 sets (corrects) the work time of the "condition adjustment" to 10 minutes longer than the normal time (reference time), based on the worker information 26. The setup work timing determination unit 31 sets the work time of the other setup items to the normal time (reference time). Then, the setup work timing determination unit 31 calculates the work start timing of each setup item, based on the set work time of each setup item and information indicating a sequence of the work included in the setup item data 41. In this manner, the worker carries out the work in accordance with the generated work start time in each setup item. Accordingly, the worker can efficiency carry out the setup work. In addition, a wasteful waiting time can be reduced. In addition, the setup work can be completed until the mass production starts.

Hitherto, the embodiments of the injection molding machine 1 have been described. However, the present invention is not limited to the above-described embodiments. Its scope is defined by the appended claims.

The setup supporting device according to the present embodiment has been described as an example in which the setup supporting device is installed in the control device 13 of the injection molding machine 1. However, the present invention is not limited thereto. A configuration may be adopted in which the setup supporting device is installed in the molding machine management server 9.

### Brief Description of the Reference Symbols

S injection molding machine system
1 Injection molding machine
2 mold unit
3 resin dryer
4 mold temperature controller
5 take-out machine
6 crusher
7 conveyor
8 network
9 molding machine management server
11 mold clamping unit
12 injection unit
13 control device
14 operation unit
15 display unit
21 setup completion time information
22 equipment information (input information)
23 mold information (input information)
24 molding condition information (input information)
25 external environment information (input information)
26 worker information (input information)
31 setup work timing determination unit
32 machine learning unit (learning unit)
33 input unit
34 output unit
35 storage unit
41 setup item data
42 setup item reference time data
43 equipment capacity correction data (table)
44 mold correction data (table)
45 external environment correction data (table)
46 worker ability correction data (table)
47 learning correction data (table)
48 actual result data (table)

## Claims

1. A setup supporting device for an injection molding machine (1) that supports a setup work including a plurality of setup items, the device comprising:
a storage unit (35) configured to store a table (43, 44, 45, 46, 47, 48) for calculating a work time of the setup items; and
a setup work timing determination unit (31) configured to calculate the work time of the setup items and determine a work start timing of the setup items, based on input information and the table (43, 44, 45, 46, 47, 48).

2. The setup supporting device for an injection molding machine (1) according to claim 1, wherein the setup work timing determination unit (31) is configured to determine a work procedure of the setup items.

3. The setup supporting device for an injection molding machine (1) according to claim 1 or 2,
wherein the input information includes at least one of equipment information (22), mold information (23), molding condition information (24), external environment information (25), and worker information (26) of the injection molding machine (1).

4. The setup supporting device for an injection molding machine (1) according to any one of claims 1 to 3, further comprising:
a learning unit (32) configured to correct the table (43, 44, 45, 46, 47, 48), based on an actual value of the setup work.

5. A setup supporting method for supporting a setup work including a plurality of setup items, the method comprising:
a step of inputting input information; and
a step of calculating a work time of the setup items and determining a work start timing of the setup items, based on the input information and a table (43, 44, 45, 46, 47, 48) for calculating the work time of the setup items.

## Patentansprüche

1. Einrichtungsunterstützungsvorrichtung für eine Spritzgießmaschine (1), die eine Einrichtungsarbeit einschließlich mehrerer Einrichtungselemente unterstützt, wobei die Vorrichtung umfasst:
eine Speichereinheit (35), die konfiguriert ist, eine Tabelle (43, 44, 45, 46, 47, 48) zum Berechnen einer Arbeitszeit der Einrichtungselemente zu speichern; und
eine Einrichtungsarbeitszeitpunktbestimmungseinheit (31), die konfiguriert ist, auf Grundlage von Eingabeinformationen und der Tabelle (43, 44, 45, 46, 47, 48) die Arbeitszeit der Einrichtungselemente zu berechnen und einen Arbeitsstartzeitpunkt der Einrichtungselemente zu bestimmen.

2. Einrichtungsunterstützungsvorrichtung für eine Spritzgießmaschine (1) nach Anspruch 1,
wobei die Einrichtungsarbeitszeitpunktbestimmungseinheit (31) konfiguriert ist, einen Arbeitsvorgang der Einrichtungselemente zu bestimmen.

3. Einrichtungsunterstützungsvorrichtung für eine Spritzgießmaschine (1) nach Anspruch 1 oder 2,
wobei die Eingabeinformationen Ausrüstungsinformationen (22) und/oder Forminformationen (23) und/oder Formbedingungsinformationen (24) und/oder Außenumgebungsinformationen (25) und/oder Arbeiterinformationen (26) der Spritzgießmaschine (1) umfassen.

4. Einrichtungsunterstützungsvorrichtung für eine Spritzgießmaschine (1) nach einem der Ansprüche 1 bis 3, ferner umfassend:
eine Lerneinheit (32), die konfiguriert ist, die Tabelle (43, 44, 45, 46, 47, 48) auf Grundlage eines tatsächlichen Werts der Einrichtungsarbeit zu korrigieren.

5. Einrichtungsunterstützungsverfahren zum Unterstützen einer Einrichtungsarbeit einschließlich mehrerer Einrichtungselemente, wobei das Verfahren umfasst:
einen Schritt zum Eingeben von Eingabeinformationen; und
einen Schritt zum Berechnen einer Arbeitszeit der Einrichtungselemente und zum Bestimmen eines Arbeitsstartzeitpunkts der Einrichtungselemente auf der Grundlage der Eingabeinformationen und einer Tabelle (43, 44, 45, 46, 47, 48) zum Berechnen der Arbeitszeit der Einrichtungselemente.

## Revendications

1. Un dispositif de support de configuration pour une machine de moulage par injection (1) qui prend en charge un travail de configuration incluant une pluralité d'éléments de configuration, le dispositif comprenant :
une unité de stockage (35) configurée pour stocker une table (43, 44, 45, 46, 47, 48) pour calculer un temps de travail des éléments de configuration ; et
une unité de détermination de temporisation de travail de configuration (31) configurée pour calculer le temps de travail des éléments de configuration et à déterminer une temporisation de début de travail des éléments de configuration, sur la base d'informations d'entrée et de la table (43, 44, 45, 46, 47, 48).

2. Le dispositif de support de configuration pour une machine de moulage par injection (1) selon la revendication 1 :
dans lequel l'unité de détermination de temporisation de travail de configuration (31) est configurée pour déterminer une procédure de travail des éléments de configuration.

3. Le dispositif de support de configuration pour une machine de moulage par injection (1) selon la revendication 1 ou 2 :
dans lequel les informations d'entrée incluent au moins l'une parmi des informations d'équipement (22), des informations de moule (23), des informations de condition de moulage (24), des informations d'environnement externe (25) et des informations de travailleur (26) de la machine de moulage par injection (1).

4. Le dispositif de support de configuration pour une machine de moulage par injection (1) selon l'une quelconque des revendications 1 à 3, comprenant en outre :
une unité d'apprentissage (32) configurée pour corriger la table (43, 44, 45, 46, 47, 48), sur la base d'une valeur réelle du travail de configuration.

5. Une méthode de support de configuration pour prendre en charge un travail de configuration incluant une pluralité d'éléments de configuration, la méthode comprenant :
une étape consistant à appliquer en entrée des informations d'entrée ; et
une étape consistant à calculer un temps de travail des éléments de configuration et à déterminer une temporisation de début de travail des éléments de configuration, sur la base des informations d'entrée et d'une table (43, 44, 45, 46, 47, 48) pour calculer le temps de travail des éléments de configuration.
